# EUROPÄISCHE PATENTANMELDUNG

(11) **EP 0 930 207 A2**
(43) Veröffentlichungstag der Anmeldung: **21.07.1999**
(21) Anmeldenummer: 98123710.0
(22) Anmeldetag: 12.12.1998
(51) Int. Cl.: B60S 1/38, B60S 1/34

(54) **Scheibenwischer mit piezokeramischem Aktor**

(30) Priorität: 16.01.1998 DE 19801392
(71) Anmelder: DaimlerChrysler AG, 70567 Stuttgart (DE)
(72) Erfinder: Frederking, Uwe, 70771 Leinfelden-Echterdingen (DE); Ott, Alfred, 71126 Gäufelden (DE); Uhl, Stefan Dr., 70597 Stuttgart (DE); Herold-Schmidt, Ursula Dr., 88074 Meckenbeuren (DE); Zaglauer, Helmut Dr., 78351 Bodman-Ludwigshafen (DE)

(57) **Zusammenfassung**

Die Erfindung betrifft einen Scheibenwischer für die Reinigung einer Fahrzeugscheibe. Er umfaßt einen schwenkbaren Wischerarm, ein daran befestigtes Wischerblatt (3) sowie piezokeramischen Aktoren (1), die am Wischerblatt (3) und/oder am Wischerarm angeordnet sind. Erfindungsgemäß ist eine elektrische Steuervorrichtung (10) vorhanden, mit der durch Ansteuerung der piezokeramischen Aktoren (1) eine Änderung der Form des Wischerblatts (3) und/oder des Wischerarms erreicht werden kann, so daß die Anpreßcharakteristik des Wischerblatts (3) auf die Scheibe dem jeweiligen Betriebszustand des Scheibenwischers oder dem Profil der Fahrzeugscheibe angepaßt wird.

## Beschreibung

Die Erfindung betrifft einen Scheibenwischer für die Reinigung einer Fahrzeugscheibe nach dem Oberbegriff des Patentanspruchs 1.

Konventionelle Scheibenwischer werden durch externe Federelemente an die Scheibe angepreßt. Sowohl Wischqualität als auch Wischerblattverschleiß konventioneller Scheibenwischer hängen in starkem Maß vom Anpreßdruck des Wischers auf der Scheibe ab. Da der Anpreßdruck bereits im Normalbetrieb durch die Krümmung des nach aerodynamischen Gesichtspunkten optimierten Scheibenprofils variiert, stellt die gewählte Anpreßcharakteristik generell eine Kompromißlösung dar. Zudem führen die aerodynamischen Kräfte bei schneller Fahrt zu verstärkten Auftriebskräften und somit zu einem die Wischwirkung stark beeinträchtigenden Abheben des Wischerblattes von der Scheibe. Zusammengefaßt ergeben sich somit bei derartigen Scheibenwischern folgende Probleme:
- Verminderte Reinigungswirkung an stark gekrümmten Scheibenpositionen;
- Wischablösung bei hohen Fahrgeschwindigkeiten infolge aerodynamischer Kräfte;
- Verminderte Reinigungswirkung im Wisch-Wasch-Betrieb;
- Wischerblattrattern durch höherfrequente Anregung von Schwingungen
- erhöhter Wischerblattverschleiß.

Zur Überwindung einer oder mehrerer dieser Probleme sind die im folgenden beschriebenen Scheibenwischer bekannt.

Die Erhöhung des Anpreßdruckes kann unter Nutzung der im Fahrbetrieb auftretenden aerodynamischen Kräfte erreicht werden. Dazu sind z.B. in der **EP 0 549 396 B1, DE 35 32 536 C1, FR 2 679 186** und **FR 2 679 852** unterschiedliche Spoilerkonfigurationen und Windleitschaufeln vorgeschlagen, die teils am Wischerblatt, aber auch am Wischerarm selbst angebracht sind. Mittels der Umkehrung des Tragflügelprinzips wird dabei nicht Auftrieb sondern Anpreßdruck gegen die Scheibe erzeugt. Die Wirksamkeit dieser Maßnahmen hängt neben der Form des Spoilers vor allem von den Fahrtwindverhältnissen ab und nimmt mit wachsender Anströmgeschwindigkeit zu, so daß hiermit in erster Linie Abhilfe gegen das Abheben der Wischerblätter bei hohen Fahrtgeschwindigkeiten geschaffen werden kann. Eine Anpassung an die Scheibenkrümmung bzw. Erhöhung des Anpreßdruckes zur Steigerung der Wischleistung im Wisch-Wasch-Betrieb ist mit aerodynamischen Hilfsmitteln jedoch nicht möglich.

Eine weitere konstruktive Maßnahme zur Anpassung des Anpreßdruckes, ist in der **DE 44 42 527 C1** beschrieben. Bei dieser Vorrichtung wird das Ansatzstück des Wischerarmes elastisch nachgiebig gestaltet, so daß der Wischer über den gesamten Wischbereich gut auf der Scheibe aufliegt.

Neben diesen Vorrichtungen, die auf rein konstruktiven Maßnahmen beruhen, sind auch sogenannte aktive Vorrichtungen bekannt. Diese sind an der Wurzel des Wischerarms angeordnet und umfassen geeignete Aktorelemente, durch deren Ansteuerung eine Erhöhung des Anpreßdruckes des gesamten Wischerblattes erreicht werden kann. Als Aktorelement wird dazu die Verwendung von Formgedächtnislegierungen, das heißt von metallischen Werkstoffen, die unter Wärmeeinwirkung ihre äußere Gestalt reversibel ändern können, vorgeschlagen. Die Krafteinleitung in den Wischerarm erfolgt einerseits durch elongierend wirkende Bügel- (**JP 59 140 147**) oder Federelemente (**JP 60 183 249**), die bei Erwärmung Zug oder Druck auf die Stellfeder des Wischerarms ausüben. Darüberhinaus kann mittels eines Aktorelement aus einer Formgedächtnislegierung oder einem bimetallischen Werkstoff ein Biegemoment auch direkt auf den Wischerarm aufgebracht werden, das unmittelbar den Anpreßdruck erhöht (**EP 0 283 849**). Der momentane Druckzustand am Wischerarm wird von einem Sensor erfaßt und über ein Regelgerät verarbeitet, so daß ein entsprechendes Steuersignal an den Aktor gegeben werden kann.

Alternativ zum Einsatz von Formgedächtnislegierungen können auch herkömmliche, elektromagnetische Aktoren, wie etwa Elektromotoren, entsprechende Auslenkungen und Kräfte auf den Wischerarm ausüben. In der **JP 59 167 349** wird dazu durch einen auf dem Arm angebrachten Rotationsmotor über ein entsprechendes Zahnradgetriebe eine Zugfeder ausgelenkt und somit der Anpreßdruck erhöht.

Der Einsatz von piezokeramischen Werkstoffen zur Verbesserung der Reinigungswirkung bei einem Scheibenwischer ist ebenfalls bekannt. Dabei werden mit einem piezokeramischen Element höherfrequente periodische Anregung des Wischblattes erzeugt, um das sogenannte Wischerblattrattern zu vermeiden. In der **EP 0 334 651** wird dazu ein piezokeramischer Oszillator direkt auf dem Wischerarm oder auf dem Wischerblatt aufgebracht. Die angeregten hochfrequenten Schwingungen erhöhen die Häufigkeit der alternierenden Rutsch- und Haftzustände im Wischerbetrieb und vermeiden damit das Rattern des Wischerblattes. Sowohl Schwingungen parallel als auch senkrecht zur Wischrichtung sind dabei wirkungsvoll. Oszillationen des Wischerblattes in Bewegungsrichtung induzieren den Rutschzustand, während Schwingungen senkrecht zur Scheibe den Anpreßdruck des Wischerblattes periodisch variieren und somit das Haften des Wischerblattes an der Scheibe vermindern. Der in der **DE 35 15 535** beschriebenen Vorrichtung liegt eine ähnliche Idee zugrunde. Durch eine periodische Anregung des Wischerblattes mit einer Frequenz, die zumindest dem Zehnfachen der Wischerfrequenz entspricht, wird jeder Punkt der Scheibe in einem Wischzyklus mehrfach vom Wischerblatt überstrichen, so daß die Wischleistung deutlich erhöht wird. Die Oszillationen können dabei durch piezokeramische oder magnetostriktive Aktoren oder durch herkömmliche Elektromotoren erzeugt werden. Die Sensoreigenschaften von piezokeramischen Materialien werden in Research Disclosure 34595, Piezoelectric Anti-Chatter Windshield Wiper Bade, Januar 1993/61 genutzt, um den Haftzustand eines Wischerblattes zu detektieren. Die während des Haftens durch die Dehnung eines entlang des Wischerblattes verlaufenden piezokeramischen Streifens erzeugte Spannung wird über einen Widerstandsdraht in Wärme umgewandelt, die ihrerseits die Flexibilität des Wischergummis erhöht und somit das Blatt in den Rutschzustand überführt, so daß ein Rattern des Wischerblattes vermieden wird.

Der Erfindung liegt die Aufgabe zugrunde, einen Scheibenwischer mit piezokeramischen Aktoren am Wischerblatt und/oder am Wischerarm derart zu verbessern, daß dessen Anpreßcharakteristik an das Scheibenprofil und an den jeweiligen Fahr- und Betriebszustand angepaßt werden kann.

Diese Aufgabe wird mit dem Scheibenwischer nach Anspruch 1 gelöst. Vorteilhafte Ausführungen der Erfindung sind Gegenstand weiterer Ansprüche.

Gemäß der Erfindung werden die piezokeramischen Aktoren, die auf dem Wischerblatt und gegebenenfalls auf dem Wischerarm angeordnet sind, mittels einer elektrischen Steuervorrichtung derart angesteuert, daß die geometrische Form von Wischerblatt oder Wischerarm verändert werden kann.

Werden die piezokeramischen Aktoren am Wischerarm angeordnet, so kann durch die Durchbiegung des Wischerarms die Höhe des Anpreßdrucks im zentralen Auflagepunkt des Wischerblatts gesteuert werde.

Werden die piezokeramischen Aktoren auf dem Wischerblatt angeordnet, kann dessen Durchbiegung ständig an die lokal überstrichene Scheibengeometrie angepaßt werden und der Anpreßdruck über die Länge des Wischerblatts gezielt gesteuert werden.

Selbstverständlich können die Durchbiegung des Wischerarms und die des Wischerblatts auch gleichzeitig vorgenommen werden.

Die erfindungsgemäße Vorrichtung ermöglicht eine optimalen Anpassung des Anpreßdrucks an den jeweiligen Betriebszustand des Scheibenwischers sowie an das Profil der Fahrzeugscheibe. So gestattet die erfindungsgemäße adaptive Steuerung der Anpreßcharakteristik:
- das gleichmäßige Anliegen des Wischers auf der Fahrzeugscheibe unabhängig von der Scheibenkrümmung,
- die Vermeidung des Abhebens des Wischers bei höheren Fahrtgeschwindigkeiten,
- die Verbesserung der Reinigungswirkung durch Erhöhung des Anpreßdruckes im Wisch-Wasch-Betrieb,
- die Anpassung des Anpreßdruckes an die Regenintensität zur Optimierung der Wischleistung bei minimalem Wischerblattverschleiß,
- Entlastung des Scheibenwischers in Ruhestellung.

Mit der Erfindung wird somit eine erhöhte Wischqualität sowie ein verminderter Wischerblattverschleiß erreicht. Gegenüber den in der Beschreibungseinleitung erwähnten aktiven Systemen ergibt sich ein einfacher und kostengünstiger Aufbau.

Durch entsprechende Ansteuerung von am Wischerarm befestigten Aktoren kann darüberhinaus der Anstellwinkel des Wischerarms bezüglich der Fahrzeugscheibe verändert werden.

Gleichzeitig gestattet eine direkt am Wischerblatt angebrachte Piezo-Aktorik die Erregung höherfrequenter Schwingungen (Frequenz >20 Hz) zur Vermeidung von Wischerblattrattern und zur Erhöhung der Wischqualität.

Die Erfindung wird anhand von Fig. näher erläutert. Es zeigen:
Fig. 1 eine Skizze zum Wirkprinzip eines piezokeramischen Aktors;
Fig. 2 einen erfindungsgemäßen Scheibenwischer im schematischer Darstellung.

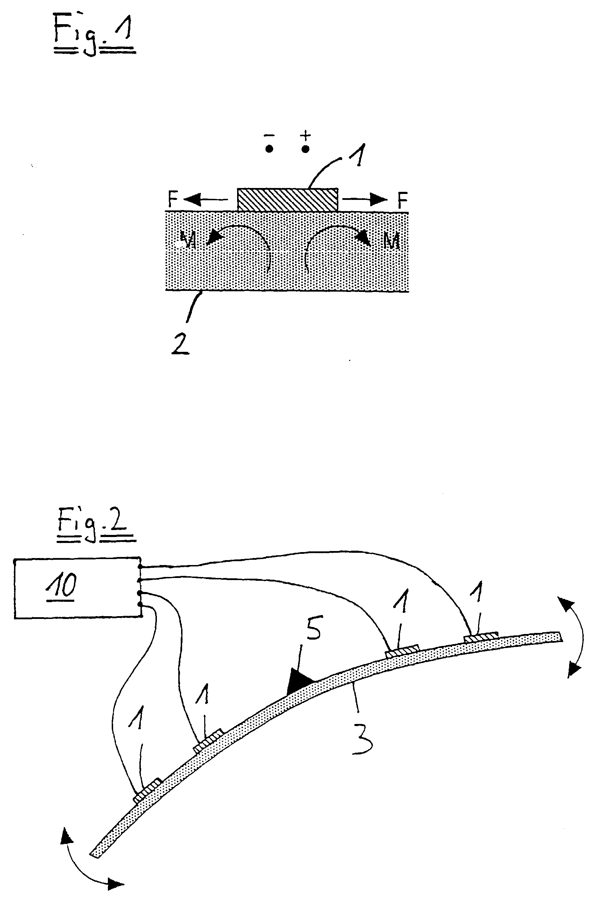

Fig. 1 zeigt eine Skizze zum Wirkprinzip eines piezokeramischen Aktuators. Bei piezoelektrischen Werkstoffen, wie etwa Quarzkristallen oder PZT-Keramiken, führt ein angelegtes elektrisches Feld zu Dehnungen bzw. Kontraktionen des Materials. Piezokeramische Aktoren sind damit in der Lage, elektrische Energie direkt in mechanische Energie umzuwandeln und bieten Vorteile wie hohe Stellauflösungen, hohe Stellkräfte und sehr kurze Ansprechzeiten bei kleinem Bauvolumen. In Kombination mit geeigneter Sensorik und Regelungselektronik können somit Stellsysteme realisiert werden, die sich selbsttätig, das heißt adaptiv an veränderte Betriebsbedingungen anpassen können.

Piezokeramische Aktoren, die sich zur Anwendung in der vorliegenden Erfindung besonders eigenen, sind Elongatoren und Biegeaktoren. Ein Elongator **1** (Fig. 1) umfaßt mindestens eine, in der Regel aber mehrere übereinandergestapelte dünne keramische piezoelektrische Platten. Bei Vorgabe einer elektrischen Spannung dehnen sich die Platten parallel zur Plattenoberfläche aus (in Richtung der eingezeichneten Kräfte **F**). Bei asymmetrischer Integration von Elongator **1** und einer Trägerstruktur **2,** wie in Fig. 1 dargestellt, können somit Biegemomente **M** induziert werden.
Ein Biegeaktor besteht wie ein Elongator aus mehreren übereinanderliegenden dünnen keramischen piezoelektrischen Platten, die sich bei Vorgabe einer elektrischen Spannung parallel zur Plattenoberfläche dehnen. Werden benachbarte Platten mit entgegengesetzter elektrischer Polung angesteuert, so können ebenfalls Biegemomente auf eine mit dem Biegeaktor verbundene Trägerstruktur übertragen werden. Anders als ein Elongator kann ein Biegeaktor auch symmetrisch in eine Trägerstruktur integriert sein, z.B innerhalb einer Schichtstruktur angeordnet sein.
Beispiele für besonders geeignete Aktoren sind z.B. QuickPack-Aktoren der Fa. AXC, 215 First Street, Cambridge, MA 02142, USA in einer Bauform analog zu QP2ON oder QP25N, die bei vollständiger Belegung eines Wischerblatts bis zu 6 mm Auslenkung an der Wischerblattspitze erzeugen. D33-Biegeaktoren der Fa. Hoechst CeramTec, Luitpoldstr. 15, D-91207 Lauf, können bei vollständiger Belegung eines Wischerblatts bis zu 13 mm Auslenkung an der Wischerblattspitze erzeugen. Hinsichtlich des Einsatzzwecks besonders optimierte Aktoren lassen zukünftige Auslenkungen an der Wischerblattspitze von bis zu 20 mm erwarten.

Mit den beschriebenen Aktoren ist somit unter elektrischer Ansteuerung eine Formänderung (Durchbiegung) von Wischerblatt und Wischerarm möglich.

Bei blockierter Dehnung können Elongatoren und Biegeelemente unter elektrischer Ansteuerung Kräfte auf die entsprechende Trägerstruktur übertragen und somit deren Steifigkeit erhöhen. Ist der piezokeramische Aktor z.B. am Wischerarm angeordnet, kann durch die blockierte Durchbiegung des Wischerarms die Höhe der Anpreßkraft im zentralen Auflagepunkt des Wischerblatts gesteuert werden. Dadurch ist insbesondere eine Anpassung an die Wassermenge (Regenintensität, Wisch-Wasch-Betrieb) und Auftrieb (hohe Fahrtgeschwindigkeit) möglich. Ist der piezokeramische Aktor auf dem Wischerblatt angeordnet, kann bei blockierter Durchbiegung des Wischerblatts die Verteilung der Auflagekraft über die Länge des Wischerblatts gesteuert werden.

Fig. 2 zeigt in schematischer Darstellung das Wischerblatt eines erfindungsgemäßen Scheibenwischers. Dazu sind mehrere plattenförmige Aktoren **1** auf dem Wischerblatt **3** angeordnet. Bezugsziffer **5** bezeichnet das Verbindungsbauteil, an dem der Wischerarm (nicht eingezeichnet) angreift. Durch entsprechende Ansteuerung der Aktoren **1** mittels der elektrischen Steuervorrichtung **10** kann die Durchbiegung des Wischerblatts **3** (angedeutet durch die beiden Pfeile am linken und rechten Rand der Zeichnung) gesteuert werden. Die Steuervorrichtung **10** kann an beliebigen Orten an oder im Fahrzeug angeordent werden, insbesondere auch an oder auf dem Wischerarm. Im Zusammenwirken der Aktoren **1** mit geeigneter Sensorik und Steuerelektronik innerhalb der Steuervorrichtung **10** wird somit ein Stellsystem geschaffen, daß die geometrische Form des Wischerblatts **3** selbständig an die Krümmung des momentan überstrichenen Bereichs der Fahrzeugscheibe anpaßt und die Anpreßcharakteristik des Scheibenwischers optimiert.
Die einzelnen Aktoren sind in diesem Beispiel regelmäßig auf dem Wischerblatt **3** verteilt. Es sind jedoch auch eine unregelmäßige Verteilung der Aktoren möglich. Grundsätzlich hängt die Anzahl und Verteilung der Aktoren auf dem Wischerblatt insbesondere von der Krümmung der Scheibe als auch von der angestrebten Gesamtauslenkung ab.

## Patentansprüche

1. Scheibenwischer für die Reinigung einer Fahrzeugscheibe, mit einem schwenkbaren Wischerarm und daran befestigtem Wischerblatt (3), sowie einem oder mehreren piezokeramischen Aktoren (1), die am Wischerblatt (3) und/oder am Wischerarm angeordnet sind, **gekennzeichnet durch** eine elektrischen Steuervorrichtung (10), mit der durch Ansteuerung der piezokeramischen Aktoren (1) eine Änderung der Form des Wischerblatts (3) und/oder des Wischerarms erreicht werden kann, so daß die Anpreßcharakteristik des Wischerblatts (3) auf die Scheibe dem jeweiligen Betriebszustand des Scheibenwischers oder dem Profil der Fahrzeugscheibe angepaßt wird.

2. Scheibenwischer nach Anspruch 1, **dadurch gekennzeichnet**, daß der piezokeramischen Aktor (1) ein Biegeaktor oder ein Elongator ist, der flächig mit Wischerblatt (3) oder Wischerarm verbunden ist.

3. Scheibenwischer nach einem der Ansprüche 1 und 2, **dadurch gekennzeichnet**, daß durch Ansteuerung der am Wischerarm befestigten Aktoren mittels der elektrischen Steuervorrichtung (10) der Anstellwinkel des Wischerarms bezüglich der Fahrzeugscheibe verändert werden kann.

4. Scheibenwischer nach einem der vorangehenden Ansprüche, **dadurch gekennzeichnet**, daß am Wischerblatt zusätzliche Aktoren vorhanden sind, durch deren Ansteuerung das Wischerblatt in höherfrequente Schwingungen versetzt werden kann.
